# FASCICULE DE BREVET EUROPEEN

(11) **EP 3 627 275 B1**
(45) Date de publication et mention de la délivrance du brevet: **23.11.2022**
(21) Numéro de dépôt: 19196446.9
(22) Date de dépôt: 10.09.2019
(51) Int. Cl.: G01K 7/01, G05F 3/24

(54) **DISPOSITIF ÉLECTRONIQUE CAPABLE DE FORMER UN CAPTEUR DE TEMPÉRATURE OU UNE SOURCE DE COURANT DÉLIVRANT UN COURANT INDÉPENDANT DE LA TEMPÉRATURE**
ELEKTRONISCHE VORRICHTUNG, DIE IN DER LAGE IST, EINEN TEMPERATURSENSOR ODER EINE STROMQUELLE ZU BILDEN, DIE STROM UNABHÄNGIG VON DER TEMPERATUR LIEFERT
ELECTRONIC DEVICE CAPABLE OF FORMING A TEMPERATURE SENSOR OR A CURRENT SOURCE FOR PROVIDING A CURRENT INDEPENDENTLY OF THE TEMPERATURE

(30) Priorité: 24.09.2018 FR 1858656
(43) Date de publication de la demande: 25.03.2020
(73) Titulaire: STMICROELECTRONICS SA, 92120 Montrouge (FR)
(72) Inventeur: LETHIECQ, Renan, 38190 BERNIN (FR); GALY, Philippe, 38660 Le Touvet (FR)
(74) Mandataire: Casalonga

(56) Documents cités:
- WO-A1-2017/201353
- US-A1- 2008 218 253
- US-A1- 2008 272 828

## Description

Des modes de réalisation de l'invention concernent les dispositifs électroniques, et plus particulièrement les dispositifs électroniques conçus pour maintenir une performance stable dans un environnement ayant une variation importante de la température.

D'une façon générale, afin de minimiser l'influence de la variation de la température, le dispositif électronique comporte
soit une structure particulière telle qu'un boîtier (« package » en langue anglaise) conçu pour évacuer la chaleur lorsque la température augmente,
soit un capteur thermique configuré pour détecter la température et un module de contrôle configuré pour contrôler des activités électrothermiques dudit dispositif électronique en fonction de la température détectée de façon à augmenter ou réduire la chaleur générée par le dispositif électronique,
soit un module de source de courant configuré pour générer des courants à coefficient de température positif (« Positive Temperature Coefficient » : PTC en langue anglaise) et/ou à coefficient de température négatif (« Negative Temperature Coefficient » : NTC en langue anglaise) de façon à générer un courant insensible à la température ambiante, ou
soit des moyens de polarisation configurés pour effectuer une polarisation précise de certains transistors dudit dispositif électronique autour d'un point à coefficient de température zéro (« Zero Temperature Coefficient » : ZTC en langue anglaise) connu de l'homme du métier de façon à rendre ces transistors insensibles à la température ambiante.

Cependant, ces solutions classiques nécessitent généralement une structure encombrante comportant plusieurs modules supplémentaires complexes afin de compenser l'influence de la variation de la température ou de polariser de façon adéquate lesdits certains transistors via leur grille arrière (« back gate » en anglais) lorsque ceux-ci sont réalisés sur un substrat du type silicium sur isolant, ce qui conduit, par conséquent, à un temps de développement élevé, un coût de fabrication élevé, et/ou une grande empreinte sur silicium.

Il existe ainsi un besoin de proposer une solution technique à faible complexité, à faible coût et à faible surface en silicium permettant de détecter la variation de la température dans l'environnement d'un dispositif électronique et de compenser cette variation de façon à maintenir la performance dudit dispositif électronique stable quelle que soit la température.

US 2008/218253 A1 et US 2008/272828 A1 divulguent des dispositifs selon l'art antérieur.

L'invention divulgue un dispositif électronique selon la revendication 1 ci-jointe. Des caractéristiques additionnelles du dispositif sont décrites dans les revendications dépendantes.

Ce dispositif électronique comporte un module ayant une borne de sortie, configuré pour délivrer sur ladite borne de sortie une tension de sortie à coefficient de température positif.

Ce module comporte
un thermistor ayant un premier transistor MOS configuré pour fonctionner en mode faible inversion et avoir une résistance drain-source à coefficient de température négatif et dont la source est couplée à ladite borne de sortie, et
une source de courant couplée à la borne de sortie et configurée pour imposer le courant drain-source du premier transistor.

Un tel dispositif électronique permet avantageusement de détecter la température ambiante par l'utilisation d'un thermistor ayant un premier transistor MOS en mode faible inversion et d'une source de courant couplée au thermistor.

Lorsque le premier transistor MOS fonctionne en mode faible inversion communément connu de l'homme du métier sous la notion anglaise « sub-threshold mode » avec la tension de grille du premier transistor inférieure à la tension de seuil du premier transistor, et est polarisé avec une tension drain-source fixe, le courant drain-source est à coefficient de température positif. Par conséquent, la résistance drain-source du premier transistor MOS est à coefficient de température négatif.

Autrement dit, la résistance drain-source du premier transistor décroît avec l'augmentation de la température.

Lorsque seule la tension drain du premier transistor est fixe et que ledit courant drain-source est imposé par ladite source de courant, la tension drain-source du premier transistor, qui est égale au produit du courant drain-source et de la résistance drain-source, diminue avec l'augmentation de la température.

En conséquence, la tension de source du premier transistor, autrement dit la tension à la borne de sortie, augmente avec l'augmentation de la température, et est par conséquent à coefficient de température positif.

Avantageusement, un tel module, qui est sensible à la température, possède une structure compacte avec juste un thermistor et une source de courant associée.

En outre, comme le thermistor fonctionne en mode faible inversion, le courant drain-source du premier transistor est très faible et la consommation dudit module est donc avantageusement faible.

Selon un mode de réalisation, la source de courant comporte un deuxième transistor MOS dont la grille est couplée à la borne de sortie, le deuxième transistor MOS étant configuré pour fonctionner en mode forte inversion et avoir un courant de fuite de grille destiné à imposer le courant drain-source du premier transistor MOS.

Les premier et deuxième transistors MOS peuvent par exemple être des transistors MOS de type N.

Selon un autre mode de réalisation, le deuxième transistor est configuré pour avoir un courant de fuite de grille du même ordre de grandeur que le courant drain-source du premier transistor.

L'utilisation du courant de fuite de grille du deuxième transistor imposant le courant drain-source du premier transistor permet avantageusement une consommation faible du module.

La tension de source du premier transistor, autrement dit la tension à la borne de sortie, impose la tension de grille du deuxième transistor.

A titre indicatif mais non limitatif, l'épaisseur de l'oxyde de grille du deuxième transistor MOS peut par exemple être inférieure à 2 nm.

La tension à la borne de sortie peut être sensiblement proportionnelle à la température.

Le module peut par exemple former un capteur de température pour détecter la température.

Selon une variante de réalisation, le dispositif électronique comprend un circuit comportant
le module évoqué précédemment et qui est avantageusement sensible à la température, et
un troisième transistor MOS à coefficient de température négatif dont la grille est couplée au drain du premier transistor MOS dudit module, dont la source est couplée à la source du deuxième transistor MOS dudit module, et dont le drain est couplé au drain de ce deuxième transistor MOS.

Les sources des deuxième et troisième transistors forment alors une sortie du circuit.

Le circuit est avantageusement configuré pour délivrer sur sa sortie un courant de sortie sensiblement indépendant de la température.

Comme indiqué ci-avant, la tension de grille du deuxième transistor est déterminée par la tension de source du premier transistor à coefficient de température positif.

Ainsi, un tel circuit ne nécessite avantageusement qu'une source d'alimentation pour polariser à la fois les deuxième et troisième transistors.

Les courants drains-sources générés par les deuxième et troisième transistors sont respectivement à coefficient de température positif et à coefficient de température négatif. La combinaison de ces courants drains-sources forme avantageusement un courant de sortie insensible à la température.

Selon un mode de réalisation, le troisième transistor MOS est un transistor MOS de type N.

Ce circuit peut avantageusement former une source de courant indépendante de la température configurée pour délivrer sur sa sortie un courant de sortie sensiblement indépendant de la température.

A titre d'exemple non limitatif, le dispositif électronique peut être réalisé de façon intégrée.

Le dispositif électronique peut par exemple être réalisé sur un substrat du type silicium sur isolant.

Lorsque ledit substrat est du type silicium sur isolant, chacun des premier, deuxième et troisième transistors possède une grille arrière et les grilles arrière des premier, deuxième et troisième transistors MOS sont avantageusement couplées ensemble.

Un tel dispositif électronique permet avantageusement de réaliser une source de courant insensible à la température sans qu'il soit nécessaire d'utiliser les grilles arrière des transistors de la source de courant pour contrôler le fonctionnement de ces transistors.

Ledit substrat du type silicium sur isolant peut par exemple être un substrat du type silicium totalement ou partiellement déserté sur isolant.

Selon un autre aspect, il est proposé un appareil électronique, tel que téléphone portable cellulaire, tablette, et ordinateur portable, comprenant un dispositif électronique tel que défini ci-avant.

D'autres avantages et caractéristiques de l'invention apparaîtront à l'examen de la description détaillée de modes de réalisation, nullement limitatifs, et des dessins annexés sur lesquels :

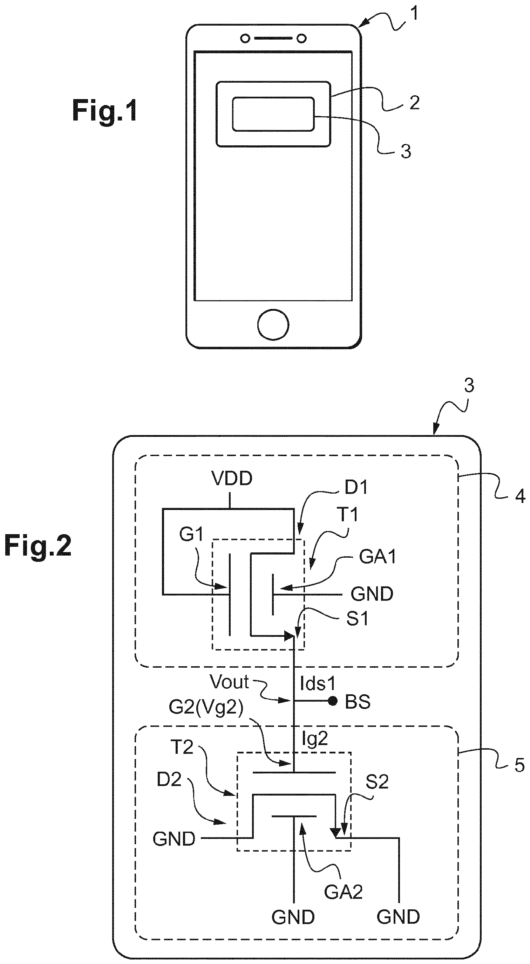

- les figures 1 à 5 illustrent schématiquement des modes de réalisation de l'invention.

La référence 1 sur la figure 1 désigne un appareil électronique, ici par exemple un téléphone mobile cellulaire conçu pour résister à des conditions environnementales extrêmes telle qu'une variation importante de la température.

L'appareil électronique 1 comporte un dispositif électronique 2 destiné à être utilisé pour minimiser l'influence de la variation de la température ambiante.

Le dispositif électronique 2 comporte ici un module 3 fonctionnant en tant que capteur de température et réalisé de façon intégrée préférentiellement sur un substrat du type silicium totalement déserté sur isolant, communément connu de l'homme du métier sous l'acronyme anglais FDSOI (« Fully Depleted Silicon On Insulator » en anglais).

Il convient de noter que le dispositif électronique 2 peut également être réalisé sur un substrat du type silicium partiellement déserté sur isolant, communément connu de l'homme du métier sous l'acronyme anglais PDSOI (« Partly Depleted Silicon On Insulator » en anglais », dont le film de silicium recouvrant la couche isolante enterrée (BOX : « Burried Oxyde) a de préférence une épaisseur pas trop importante pour éviter les effets de mémoire, par exemple une épaisseur proche de celle du film semiconducteur d'un substrat du type silicium totalement déserté sur isolant (FDSOI).

On se réfère maintenant à la figure 2 pour illustrer plus en détails un exemple de réalisation du module 3 qui comporte
un thermistor 4 comportant un premier transistor MOS T1, ici par exemple de type N, dont la source S1 est couplée à une borne de sortie BS du module, et dont le drain D1 et la grille G1 sont conjointement couplés à une tension d'alimentation VDD, et
une source de courant 5 comportant un deuxième transistor MOS T2, ici par exemple de type N, dont la grille G2 est couplée à la borne de sortie BS, dont le drain D2 et la source S2 sont conjointement couplés à la masse GND.

Ladite tension d'alimentation VDD peut par exemple être à 1V pour que le premier transistor T1 soit en mode faible inversion, c'est-à-dire présentant une tension grille-source inférieure à sa tension de seuil.

Dans ce cas là, la tension de sortie Vout à la borne de sortie BS, autrement dit la tension de grille Vg2 du deuxième transistor T2, est variable entre 0,6V et 0,95V, ce qui permet un fonctionnement du deuxième transistor T2 en mode forte inversion, c'est-à-dire présentant une tension grille-source supérieure à sa tension de seuil.

Il convient de noter que le drain D2 du deuxième transistor T2 peut également être couplé à une tension d'alimentation, par exemple à 1V, au prix d'une augmentation de la consommation énergétique du deuxième transistor T2.

Comme le deuxième transistor T2 fonctionne en mode forte inversion, il existe un courant de fuite de grille Ig2 du deuxième transistor T2 qui impose le courant drain-source Ids1 du premier transistor T1. Les ordres de grandeur du courant de fuite de grille Ig2 et du courant drain-source Ids1 du premier transistor T1 sont sensiblement égaux. A titre indicatif ces courants de fuite sont de l'ordre de la centaine de picoampères.

Pour ce faire, l'épaisseur de l'oxyde de grille du deuxième transistor T2 est préférablement inférieure à 2 nm.

Il convient de noter que les grilles arrière GA1, GA2 (« back gate » en langue anglaise) des premier et deuxième transistors T1 et T2 sont couplées à la masse GND et ne sont pas utilisées pour contrôler les premier et deuxième transistors T1 et T2.

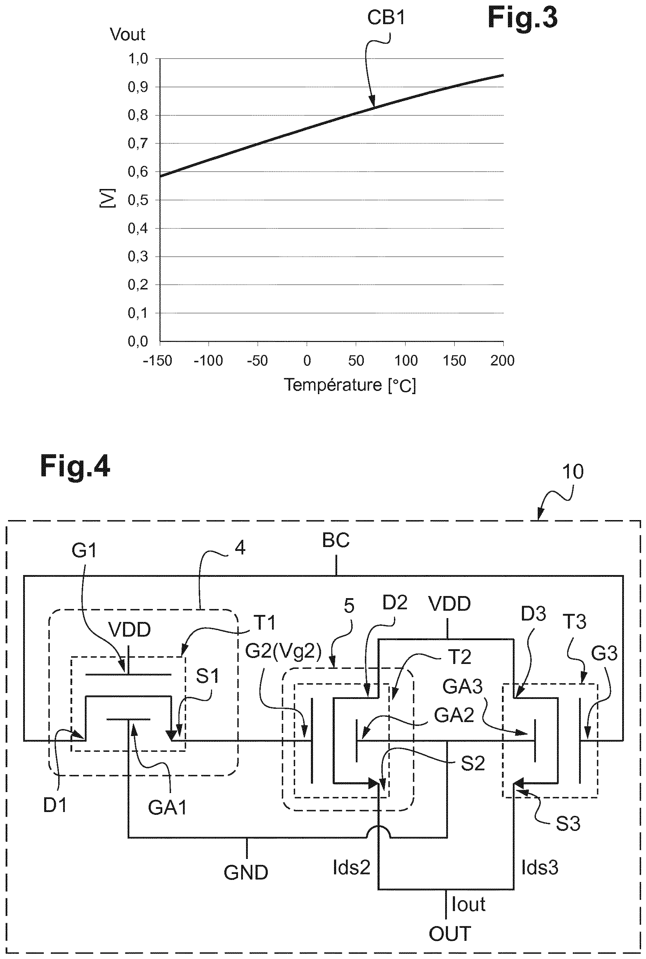

La figure 3 illustre une simulation du type SPICE (« Simulation Program with Integrated Circuit Emphasis » en langue anglaise) du module 3 en fonction de la température dans une plage entre -150°C et 200°C.

Comme on le constate sur la courbe CB1 de la figure 3, la tension de sortie Vout varie proportionnellement à la température. La tension de sortie Vout varie sensiblement linéairement entre 0,6V et 0,95V.

De ce fait, ledit module 3 forme un capteur de température permettant de détecter la température en fonction de la tension de sortie Vout mesurée.

Le dispositif électronique 2 peut aussi être utilisé à d'autres fins, moyennant une modification de structure, et ce pas nécessairement à l'intérieur d'un téléphone mobile cellulaire, comme illustré sur la figure 4.

Dans cette variante de réalisation, le dispositif électronique 2 comporte un circuit 10 dont on verra ci-après qu'il est insensible à la température en ce sens qu'il est capable de délivrer sur sa sortie un courant sensiblement indépendant de la température.

Le dispositif électronique 2 illustré ici sur la figure 4 est par exemple réalisé de la même façon au niveau de la technologie que celui illustré sur la figure 2.

Ledit circuit 10 comporte
le module 3 tel qu'illustré sur la figure 2, et
un troisième transistor MOS T3, ici par exemple également de type N, dont la grille G3 est couplée au drain D1 du premier transistor T1, dont la source S3 est couplée à la source S2 du deuxième transistor T2, et dont le drain D3 est couplé au drain D2 du deuxième transistor T2.

Les sources S2, S3 des deuxième et troisième transistors T2, T3 forment une sortie OUT délivrant un courant de sortie Iout.

Cette sortie OUT pourrait être éventuellement couplée à la masse GND par l'intermédiaire ou non d'une charge.

Les drains D2, D3 des deuxième et troisième transistors T2, T3 sont conjointement couplés à une tension d'alimentation VDD, par exemple à 1V.

La grille G1 du premier transistor T1 du module 3 est également couplée à la tension d'alimentation VDD.

Le troisième transistor T3 est un transistor classique à coefficient de température négatif.

La grille G3 du troisième transistor T3 et le drain D1 du premier transistor T1 sont couplés et forment une borne de contrôle BC.

Lorsque la borne de contrôle BC est couplée à une tension d'alimentation, par exemple la tension d'alimentation VDD, le troisième transistor T3 fonctionne en forte inversion, autrement dit sa tension grille-source est supérieure à sa tension de seuil.

Lorsque le troisième transistor T3 fonctionne en forte inversion, le courant drain-source Ids3 du troisième transistor T3 varie de façon inversement proportionnelle à la température ambiante.

En même temps, la tension grille Vg2 du deuxième transistor T2 varie proportionnellement à la température ambiante comme illustré sur la figure 3.

Par conséquent, le courant drain-source Ids2 du deuxième transistor T2 étant contrôlé par la tension grille Vg2 varie proportionnellement à température ambiante. Autrement dit, le deuxième transistor T2 fonctionnant en mode forte inversion est à coefficient de température positif.

En choisissant convenablement les dimensions des deuxième et troisième transistors T2, T3 de façon à ajuster les valeurs des courants Ids2 et Ids3, le courant de sortie Iout qui est la somme de ces deux courants, peut être indépendant de la température.

En d'autres termes, dans ce cas, le courant de sortie Iout reste stable quelle que soit la température ambiante.

Il convient de noter que ledit circuit 10 ne nécessite avantageusement qu'une tension de contrôle à la borne de contrôle BC de façon à contrôler le fonctionnement de la source de courant, ce qui est différent d'une solution classique exigeant généralement deux tensions de contrôle précises à appliquer respectivement sur les grilles G2, G3 des deuxième et troisième transistors T2, T3.

Dans cet exemple de réalisation, les grilles arrière GA1, GA2, GA3 des premier, deuxième et troisième transistors T1, T2, T3 sont conjointement couplées à la masse GND et ne sont pas utilisées pour contrôler le fonctionnement de la source de courant, ce qui est également différent d'une solution classique exigeant des contrôles des grilles arrière des transistors.

Cela étant, en variante, les grilles arrière GA1, GA2, GA3 des premier, deuxième et troisième transistors T1, T2, T3 pourraient être polarisées de manière individualisée pour par exemple permettre des contrôles complémentaires de canal de ces transistors.

De surcroît, le thermistor 4 peut comporter un transistor supplémentaire, par exemple monté en diode, et couplé entre la source S1 du premier transistor T1 et la grille G2 du deuxième transistor T2 de façon à augmenter la résistance équivalente du thermistor 4.

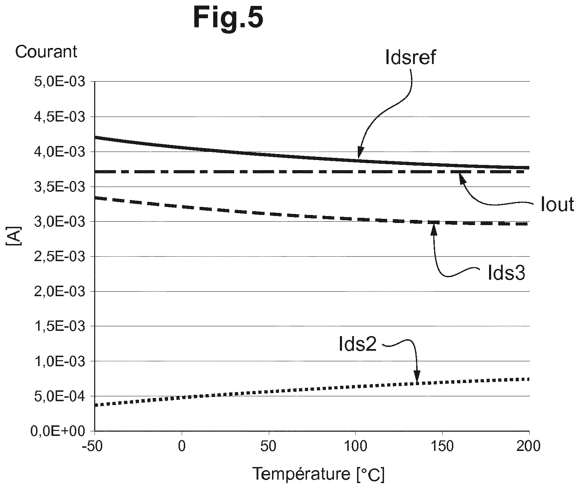

On se réfère maintenant à la figure 5 pour illustrer une simulation SPICE d'un circuit 10 lorsque la borne de contrôle BC dudit circuit 10 est couplée à une tension d'alimentation VDD à 1V.

A titre d'exemple non limitatif, la longueur du canal du premier transistor T1 est de 500nm et les longueurs des canaux des deuxième et troisième transistors sont égales à 30nm. Les largeurs des canaux des premier, deuxième et troisième transistors T1, T2, T3 sont respectivement de 500nm, 1µm, 3,75µm.

La figure 5 illustre également une simulation SPICE mettant en œuvre un transistor de référence qui est équivalent de la combinaison des deuxième et troisième transistors T2, T3. La longueur du canal du transistor de référence est identique que celles des deuxième et troisième transistors T2, T3 et la largeur du canal du transistor de référence est égale à la somme des celles des deuxième et troisième transistors T2, T3, soit de 4,75µm.

Il est en effet connu de l'homme du métier d'utiliser un tel transistor de référence classique à coefficient de température négatif pour comparer son courant drain-source avec le courant de sortie d'une source de courant équivalente qui est insensible à la température. Un grand décalage (« offset » en langue anglaise) entre ses courants drains-sources peut généralement être observé avec des sources de courant insensible à la température de l'art antérieur.

La figure 5 montre que la variation du courant drain-source Ids2 du deuxième transistor T2 est proportionnelle à la variation de la température. Les variations des courants drains-sources Ids3 et Idsref du troisième transistor T3 et du transistor de référence sont inversement proportionnels à la variation de la température.

Le courant de sortie Iout qui est la somme des courants Ids2 et Ids3 est sensiblement constant quelle que soit la température.

Avantageusement par rapport au cas d'une source de courant insensible à la température classique, il existe très peu de décalage entre le courant de sortie Iout et le courant drain-source Idsref du transistor de référence.

De ce fait, la dégradation au niveau du courant de sortie par rapport au transistor de référence est réduite et la performance du circuit 10 formant une source de courant indépendante de la température est avantageusement supérieure à celle d'une source de courant insensible à la température classique.

Ainsi, on obtient un dispositif électronique permettant de détecter la température et de délivrer un courant indépendant de la température avec une seule tension d'alimentation de contrôle tout en utilisant un circuit peu encombrant, peu complexe, de faible consommation énergétique et plus performant.

## Revendications

1. Dispositif électronique (2), comprenant
un module (3) ayant une borne de sortie (BS), configuré pour délivrer sur ladite borne de sortie (BS) une tension de sortie (Vout) à coefficient de température positif, le module (3) comportant
un thermistor (4) ayant un premier transistor MOS (T1) configuré pour fonctionner en mode faible inversion et avoir une résistance drain-source à coefficient de température négatif et dont la source (S1) est couplée à ladite borne de sortie (BS), et
une source de courant (5) couplée à la borne de sortie (BS) et configurée pour imposer le courant drain-source (Idsl) du premier transistor (T1).

2. Dispositif électronique (2) selon la revendication 1, dans lequel la source de courant (5) comporte un deuxième transistor MOS (T2) dont la grille (G2) est couplée à la borne de sortie (BS), le deuxième transistor MOS (T2) étant configuré pour fonctionner en mode forte inversion et avoir un courant de fuite de grille (Ig2) destiné à imposer le courant drain-source (Idsl) du premier transistor MOS (T1).

3. Dispositif électronique (2) selon la revendication 2, dans lequel les premier et deuxième transistors MOS (T1, T2) sont des transistors MOS de type N.

4. Dispositif électronique (2) selon la revendication 2 ou 3, dans lequel le deuxième transistor (T2) est configuré pour avoir un courant de fuite de grille (Ig2) du même ordre de grandeur que le courant drain-source (Idsl) du premier transistor (T1).

5. Dispositif électronique (2) selon la revendication 4, dans lequel l'épaisseur de l'oxyde de grille du deuxième transistor MOS (T2) est inférieure à 2 nm.

6. Dispositif électronique (2) selon l'une quelconque des revendications 1 à 5, dans lequel ledit module (3) forme un capteur de température.

7. Dispositif électronique (2) selon l'une quelconque des revendications 2 à 5, comprenant un circuit (10) comportant
ledit module (3), et
un troisième transistor MOS (T3) à coefficient de température négatif dont la grille (G3) est couplée au drain (D1) du premier transistor MOS (T1) du module, dont la source (S3) est couplée à la source (S2) du deuxième transistor MOS (T2) du module, et dont le drain (D3) est couplé au drain (D2) de ce deuxième transistor MOS (T2),
les sources (S2, S3) des deuxième et troisième transistors (T2, T3) formant une sortie dudit circuit.

8. Dispositif électronique (2) selon la revendication 7, dans lequel le troisième transistor MOS (T3) est un transistor MOS de type N.

9. Dispositif électronique (2) selon l'une quelconque des revendications 7 ou 8, dans lequel ledit circuit (10) forme une source de courant indépendante de la température configurée pour délivrer sur ladite sortie un courant de sortie (Iout) sensiblement indépendant de la température.

10. Dispositif électronique (2) selon l'une quelconque des revendications précédentes, réalisé de façon intégrée.

11. Dispositif électronique (2) selon la revendication 10, réalisé sur un substrat du type silicium sur isolant.

12. Dispositif électronique (2) selon la revendication 11 prise en combinaison avec la revendication 7 ou 8, dans lequel ledit substrat est du type silicium sur isolant, chacun des premier, deuxième et troisième transistors (T1, T2, T3) possède une grille arrière (GA1, GA2, GA3), et les grilles arrière (GA1, GA2, GA3) des premier, deuxième et troisième transistors MOS (T1, T2, T3) sont couplées ensemble.

13. Dispositif électronique (2) selon la revendication 11 ou 12, dans lequel le substrat du type silicium sur isolant est un substrat du type silicium totalement ou partiellement déserté sur isolant.

14. Appareil électronique (1), tel que téléphone portable cellulaire, tablette, et ordinateur portable, comprenant un dispositif électronique (2) selon l'une quelconque des revendications 1 à 13.

## Patentansprüche

1. Elektronische Vorrichtung (2), umfassend
ein Modul (3), das eine Ausgangsklemme (BS) aufweist, die konfiguriert ist, um an der Ausgangsklemme (BS) eine Ausgangsspannung (Vout) mit positivem Temperaturkoeffizienten abzugeben, wobei das Modul (3) Folgendes beinhaltet
einen Thermistor (4), der einen ersten MOS-Transistor (T1) aufweist, der konfiguriert ist, im schwachen Umschaltmodus zu funktionieren, und einen Drain-Source-Widerstand mit negativem Temperaturkoeffizienten aufzuweisen, und dessen Source (S1) an die Ausgangsklemme (BS) gekoppelt ist, und eine Stromquelle (5), die an die Ausgangsklemme (BS) gekoppelt ist und konfiguriert ist, um den Drain-Source-Strom (Idsl) des ersten Transistors (T1) aufzuerlegen.

2. Elektronische Vorrichtung (2) nach Anspruch 1, wobei die Stromquelle (5) einen zweiten MOS-Transistor (T2) beinhaltet, dessen Gate (G2) an die Ausgangsklemme (BS) gekoppelt ist, wobei der zweite MOS-Transistor (T2) konfiguriert ist, um im starken Umschaltmodus zu funktionieren, und einen Gate-Leckstrom (Ig2) aufzuweisen, der dazu bestimmt ist, um den Drain-Source-Strom (Idsl) des ersten MOS-Transistors (T1) aufzuerlegen.

3. Elektronische Vorrichtung (2) nach Anspruch 2, wobei der erste und zweite MOS-Transistor (T1, T2) N-Kanal MOS-Transistoren sind.

4. Elektronische Vorrichtung (2) nach Anspruch 2 oder 3, wobei der zweite Transistor (T2) konfiguriert ist, um einen Gate-Leckstrom (Ig2) in derselben Größenordnung wie den Drain-Source-Strom (Idsl) des ersten Transistors (T1) aufzuweisen.

5. Elektronische Vorrichtung (2) nach Anspruch 4, wobei die Dicke des Gate-Oxids des zweiten MOS-Transistors (T2) kleiner als 2 nm ist.

6. Elektronische Vorrichtung (2) nach einem der Ansprüche 1 bis 5, wobei das Modul (3) einen Temperatursensor bildet.

7. Elektronische Vorrichtung (2) nach einem der Ansprüche 2 bis 5, eine Schaltung (10) umfassend, die das Modul (3) beinhaltet, und
einen dritten MOS-Transistor (T3) mit negativem Temperaturkoeffizienten, dessen Gate (G3) an den Drain (D1) des ersten MOS-Transistors (T1) des Moduls gekoppelt ist, dessen Source (S3) an die Source (S2) des zweiten MOS-Transistors (T2) des Moduls gekoppelt ist, und dessen Drain (D3) an den Drain (D2) dieses zweiten MOS-Transistors (T2) gekoppelt ist,
wobei die Quellen (S2, S3) des zweiten und dritten Transistors (T2, T3) einen Ausgang der Schaltung bilden.

8. Elektronische Vorrichtung (2) nach Anspruch 7, wobei der dritte MOS-Transistor (T3) ein N-Kanal MOS-Transistor ist.

9. Elektronische Vorrichtung (2) nach einem der Ansprüche 7 oder 8, wobei die Schaltung (10) eine von der Temperatur unabhängige Stromquelle bildet, die konfiguriert ist, um an dem Ausgang einen Ausgangsstrom (Iout) im Wesentlichen unabhängig von der Temperatur abzugeben.

10. Elektronische Vorrichtung (2) nach einem der vorstehenden Ansprüche, die in integrierter Form ausgeführt ist.

11. Elektronische Vorrichtung (2) nach Anspruch 10, die auf einem Substrat in der Art von Silizium auf einer Isolierung ausgeführt ist.

12. Elektronische Vorrichtung (2) nach Anspruch 11, in Kombination mit Anspruch 7 oder 8, wobei das Substrat in der Art von Silizium auf einer Isolierung ist, wobei jeder von dem ersten, zweiten und dritten Transistor (T1, T2, T3) ein hinteres Gate (GA1, GA2, GA3) besitzt, und die hinteren Gates (GA1, GA2, GA3) des ersten, zweiten und dritten MOS-Transistors (T1, T2, T3) zusammengekoppelt sind.

13. Elektronische Vorrichtung (2) nach Anspruch 11 oder 12, wobei das Substrat in der Art von Silizium auf einer Isolierung ein Substrat in der Art von Silizium ist, das vollständig oder teilweise auf einer Isolierung verarmt ist.

14. Elektronisches Gerät (1), wie ein Handy-Telefon, ein Tablet-Computer und Laptop, das eine elektronische Vorrichtung (2) nach einem der Ansprüche 1 bis 13 umfasst.

## Claims

1. Electronic device (2), comprising
a module (3) having an output terminal (BS), configured to supply said output terminal (BS) with a positive temperature coefficient output voltage (Vout), the module (3) including
a thermistor (4) having a first MOS transistor (T1) configured to operate in a sub-threshold mode and to have a drain-to-source resistance with a negative temperature coefficient and whose source (S1) is coupled to said output terminal (BS), and
a current source (5) coupled to the output terminal (BS) and configured to impose the drain-to-source current (Idsl) of the first transistor (T1).

2. Electronic device (2) according to claim 1, wherein the current source (5) includes a second MOS transistor (T2) whose gate (G2) is coupled to the output terminal (BS), the second MOS transistor (T2) being configured to operate in above-threshold mode and to have a gate leakage current (Ig2) intended to impose the drain-to-source current (Idsl) of the first MOS transistor (T1).

3. Electronic device (2) according to claim 2, wherein the first and second MOS transistors (T1, T2) are N-type MOS transistors.

4. Electronic device (2) according to claim 2 or 3, wherein the second transistor (T2) is configured to have a gate leakage current (Ig2) of the same order of magnitude as the drain-to-source current (Idsl) of the first transistor (T1) .

5. Electronic device (2) according to claim 4, wherein the thickness of the gate oxide of the second MOS transistor (T2) is less than 2 nm.

6. Electronic device (2) according to any one of claims 1 to 5, wherein said module (3) forms a temperature sensor.

7. Electronic device (2) according to any one of claims 2 to 5, comprising a circuit (10) including said module (3), and
a third MOS transistor (T3) with a negative temperature coefficient, the gate (G3) whereof is coupled to the drain (D1) of the first MOS transistor (T1) of the module, the source (S3) whereof is coupled to the source (S2) of the second MOS transistor (T2) of the module, and the drain (D3) whereof is coupled to the drain (D2) of this second MOS transistor (T2),
the sources (S2, S3) of the second and third transistors (T2, T3) forming an output of said circuit.

8. Electronic device (2) according to claim 7, wherein the third MOS transistor (T3) is an N-type MOS transistor.

9. Electronic device (2) according to any one of claims 7 or 8, wherein said circuit (10) forms a temperature-independent current source configured to supply a substantially temperature-independent output current (Iout) at said output.

10. Electronic device (2) according to any one of the preceding claims, produced in an integrated manner.

11. Electronic device (2) according to claim 10, produced on a substrate of the silicon-on-insulator type.

12. Electronic device (2) according to claim 11 taken in combination with claim 7 or 8, wherein said substrate is of the silicon-on-insulator type, each of the first, second and third transistors (T1, T2, T3) has a back gate (GA1, GA2, GA3), and the back gates (GA1, GA2, GA3) of the first, second and third MOS transistors (T1, T2, T3) are coupled together.

13. Electronic device (2) according to claim 11 or 12, wherein the substrate of the silicon-on-insulator type is a substrate of the fully or partially depleted silicon-on-insulator type.

14. Electronic apparatus (1), such as a cellular mobile phone, a tablet, and a laptop computer, comprising an electronic device (2) according to any one of claims 1 to 13.
